(19) Europäisches Patentamt / European Patent Office / Office européen des brevets

(11) **EP 2 176 190 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
*H01M 10/0562* (2010.01)  *C04B 35/48* (2006.01)
*C04B 35/486* (2006.01)  *C04B 35/64* (2006.01)
*C01G 25/00* (2006.01)  *H01M 4/13* (2010.01)
*H01M 8/124* (2016.01)  *H01M 10/05* (2010.01)
*H01M 10/052* (2010.01)  *H01G 11/24* (2013.01)
*H01G 11/30* (2013.01)

(21) Anmeldenummer: **08773814.2**

(22) Anmeldetag: **02.07.2008**

(86) Internationale Anmeldenummer:
**PCT/EP2008/005402**

(87) Internationale Veröffentlichungsnummer:
**WO 2009/003695 (08.01.2009 Gazette 2009/02)**

(54) **IONENLEITER MIT GRANATSTRUKTUR**

ION CONDUCTOR HAVING A GARNET STRUCTURE

CONDUCTEUR D'IONS À STRUCTURE GRENAT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.07.2007 DE 102007030604**

(43) Veröffentlichungstag der Anmeldung:
**21.04.2010 Patentblatt 2010/16**

(73) Patentinhaber: **BASF SE**
**67056 Ludwigshafen am Rhein (DE)**

(72) Erfinder:
• **WEPPNER, Werner**
**24226 Heikendorf (DE)**
• **MURUGAN, Ramaswamy**
**Puducherry 605 014 (IN)**

(74) Vertreter: **BASF IP Association**
**BASF SE**
**G-FLP-C006**
**67056 Ludwigshafen (DE)**

(56) Entgegenhaltungen:
EP-A1- 2 037 527    WO-A-2005/085138
CN-A- 1 694 285    JP-A- H0 389 469

• **THANGADURAI V ET AL: "Novel fast lithium ion conduction in garnet-type Li5La3M2O12 (M = Nb, Ta)", JOURNAL OF THE AMERICAN CERAMIC SOCIETY, BLACKWELL PUBLISHING, MALDEN, MA, US, vol. 86, no. 3, 1 January 2003 (2003-01-01), pages 437-440, XP002329148, ISSN: 0002-7820**

**Beschreibung**

Die vorliegende Erfindung betrifft die Verwendung von chemisch stabilen festen Ionenleitern mit granatartiger Struktur in Batterien, Superkondensatoren, Akkumulatoren und elektrochromen Vorrichtungen, chemischen Sensoren und thermoelektrischen Wandlern, sowie neue Verbindungen, die für diese Verwendungen geeignet sind.

Wiederaufladbare (sekundäre) Batterien kommen zur Anwendung, wo ein zeitweise oder gänzlich netzunabhängiger Betrieb von elektrischen und elektronischen Geräten erforderlich oder gewünscht ist. Die Erforschung fester Ionenleiter als Elektrolytmaterialien für die Verwendung bildet in diesem Zusammenhang einen wichtigen Aspekt der aktuellen Materialforschung. Die angestrebten Vorteile einer nur aus Festkörpern bestehenden Batterie sind Auslaufsicherheit, Miniaturisierbarkeit, elektrochemische Stabilität, höhere Energiedichten und längere Lebensdauer.

Unter den verschiedenen Batterie-Technologien setzen sich in den letzten Jahren die auf Lithiumionen basierenden Batteriesysteme zunehmend durch. Sie zeichnen sich besonders durch ihre hohe erreichbare elektrische Energiedichte und Leistung aus, die auf das hohe chemische Reaktionsvermögen und die geringe Masse der Lithiumionen sowie deren hohe Beweglichkeit zurückzuführen sind. Die Entwicklung fester Lithiumionenleiter hat in den letzten Jahren eine beträchtliche Aufmerksamkeit auf sich gezogen. Beispiele dafür sind etwa $Li_{2,9}PO_{3,3}N_{0,46}$ oder $Li_3N$ und Li-β-Aluminiumoxid. $Li_{2,9}PO_{3,3}N_{0,46}$ besitzt jedoch eine deutlich geringere Ionenleitfähigkeit als Flüssigelektrolyte. $Li_3N$ und Li-β-Aluminiumoxid sind sehr empfindlich gegenüber Feuchtigkeit. Außerdem zersetzt sich $Li_3N$ schon bei einer Spannung von 0,445 V bei Raumtemperatur und Li-β-Aluminiumoxid ist chemisch nicht stabil.

In der Arbeit von Thangadurai et al., "Novel Fast Lithium Ion Conduction in Garnet-Type Li5La3M2O12 (M = Nb, Ta)", J. Am. Ceram. Soc. 86, 437-440, 2003, wurden erstmals Lithiumionenleiter mit granatartiger Struktur vorgestellt. Die granatartigen $Li_5La_3M_2O_{12}$-Verbindungen weisen eine merkliche Lithiumionenleitfähigkeit auf.

Granate sind strukturell betrachtet Orthosilikate der allgemeinen Zusammensetzung $X_3Y_2(SiO_4)_3$, die im kubischen Kristallsystem kristallisieren, wobei X und Y achtfach bzw. sechsfach koordinierte Kationenstellen darstellen. Die einzelnen $SiO_4$-Tetraeder sind miteinander durch ionische Bindungen über die interstitiellen B-Kationen verbunden.

Die in der obigen Arbeit von Thangadurai et al. beschriebenen granatartigen Verbindungen der Formel $Li_5La_3M_2O_{12}$ (M = Nb, Ta) enthalten im Vergleich zu einer idealen Granatstruktur einen Überschuss an Li-Ionen. Die $La^{3+}$- und $M^{5+}$-Ionen besetzen die achtfach bzw. sechsfach koordinierten Stellen, während Lithiumionen Positionen mit sechsfacher Koordination einnehmen.

Die PCT-Anmeldung WO 2005/085138 beschreibt, dass formal durch aliovalente Substitution ausgehend von den Verbindungen der Formel $Li_5La_3M_2O_{12}$ (mit M = Nb oder Ta) weitere granatartige Lithiumionenleiter erhalten werden. Durch aliovalente Substitution der $La^{3+}$-Stellen kann die Konnektivität des Netzwerks erhöht und die Anzahl an verfügbaren Leerstellen variiert werden. Der Ladungsausgleich erfolgt bevorzugt über $Li^+$-Ionen (L). Unter "aliovalenter Substitution" versteht man die Substitution eines Ions durch ein Ion einer anderen Oxidationsstufe, wodurch Kationenleerstellen, Anionenleerstellen, interstitielle Kationen und/oder interstitielle Anionen entstehen. Die festen Lithiumionenleiter sind chemisch stabil und weisen eine Ionenleitfähigkeit von mehr als 3,4 x $10^{-6}$ S/cm auf. Aufgrund ihrer hohen Ionenleitfähigkeit bei vernachlässigbarer Elektronenleitung sind sie als Festkörperelektrolyte verwendbar.

Die in WO 2005/085138 beschriebenen Verbindungen weisen allgemein die stöchiometrische Zusammensetzung $L_{5+x}A_yG_zM_2O_{12}$ auf, worin

L jeweils unabhängig ein beliebiges bevorzugt einwertiges Kation ist,

A jeweils unabhängig ein ein-, zwei-, drei- oder vierwertiges Kation ist,

G jeweils unabhängig ein ein-, zwei-, drei- oder vierwertiges Kation ist,

M jeweils unabhängig ein drei-, vier- oder fünfwertiges Kation ist,

$$0 < x \leq 3, \ 0 \leq y \leq 3, \ 0 \leq z \leq 3$$

und worin O teilweise oder vollständig ersetzt sein kann durch zweiwertige und/oder dreiwertige Anionen wie z.B. $N^{3-}$.

In den beschriebenen Ionenleitern ist M jeweils eines der Metalle Nb und Ta. Andere Beispiele für Metallionen sind nicht angegeben. Die Ionenleitung erfolgt über Lithiumionen (L = Li).

In den letzten Jahren wurden weitere Beispiele für Lithiumionenleiter mit Granatstruktur untersucht (V. Thangadurai, W. Weppner, Adv. Funct. Mater. 2005, 15,107-112; V. Thangadurai, W. Weppner, J. Power Sources, 2005, 142, 339-344). Dabei wies $Li_6BaLa_2Ta_2O_{12}$ die höchste $Li^+$-Ionenleitfähigkeit von 4x$10^{-5}$ $Scm^{-1}$ bei 22°C mit einer Aktivierungsenergie von 0,40 eV auf. Während $Li_6BaLa_2Ta_2O_{12}$ stabil gegenüber einer Reaktion mit metallischem Lithium, Feuchtigkeit, Luft und üblichen Elektrodenmaterialien ist, sind die Volumenleitfähigkeit und Gesamtleitfähigkeit bei Raumtemperatur noch nicht ausreichend hoch, um eine ideale wiederaufladbare feste Lithiumionen-Batterie zu entwickeln. Dokument JPH0389469 erwähnt Ionenleiter mit der Granatstruktur und der Formel $Na_{1+x}Zr_2Si_xP_{3-x}O_{12}$. Problematisch ist bei den obigen Ionenleitern des Standes der Technik außerdem, dass die vorgeschlagenen Metalle Niob und Tantal verhältnismäßig teuer und nur schlecht verfügbar sind. Außerdem ist die Verwendung eines festen Elektrolyten, der vollständig aus den beschriebenen granatartigen Verbindungen besteht aufwändig und mit hohen Kosten verbunden.

Die Aufgabe der vorliegenden Erfindung war es daher, verbesserte feste Ionenleiter bereitzustellen, bei denen die obigen Nachteile zumindest teilweise überwunden sind.

Es wurde nun erfindungsgemäß herausgefunden, dass in den granatartigen Ionenleitern Zirkonium als Metall M verwendet werden kann. Zirkonium ist im Gegensatz zu Niob und Tantal gut verfügbar und führt zu sehr stabilen Festkörperstrukturen. Während Nb und Ta in der Granatstruktur formal in der Oxidationsstufe +V vorliegen, nimmt Zr bevorzugt die Oxidationsstufe +IV ein.

Die Erfindung betrifft daher in einer Ausführungsform einen festen Ionenleiter mit einer granatartigen Kristallstruktur, der die stöchiometrische Zusammensetzung $L_{7+x}A_xG_{3-x}Zr_2O_{12}$ aufweist, worin

L jeweils unabhängig ein einwertiges Kation ist,
A jeweils unabhängig ein zweiwertiges Kation ist,
G jeweils unabhängig ein dreiwertiges Kation ist,

$$0 \leq x \leq 3,$$

L ist ein Alkalimetallion, $Li^+$, $Na^+$ oder $K^+$. Dabei sind insbesondere auch Kombinationen verschiedener Alkalimetallionen für L möglich. In einer besonders bevorzugten Ausführungsform der Erfindung ist $L = Na^+$. Natrium ist sehr kostengünstig und in beliebig großen Mengen verfügbar. Das kleine $Na^+$-Ion ist in den granatartigen Strukturen gut beweglich und in Kombination mit Zirkonium ergeben sich chemisch stabile Kristallstrukturen.

A sind Erdalkalimetallionen wie Ca, Sr, Ba und/oder Mg. Es wurde gefunden, dass sich diese Ionen in den erfindungsgemäßen granatartigen Verbindung kaum oder überhaupt nicht bewegen, sodass die Ionenleitung im Wesentlichen über L erfolgt.

In der obigen Zusammensetzung ist weiter bevorzugt $0 \leq x \leq 2$, und besonders bevorzugt $0 \leq x \leq 1$. In einer erfindungsgemäßen Ausführungsform ist $x = 0$, sodass A in der granatartigen Verbindung nicht enthalten ist.

G = La.

Die vorliegende Erfindung stellt in einem spezielleren Aspekt einen festen Ionenleiter der stöchiometrischen Zusammensetzung $L_{7+x}A_xLa_{3-x}Zr_2O_{12}$ bereit, wobei A ein zweiwertiges Metall bedeutet und L Li oder Na ist. Na ist aufgrund der günstigen Verfügbarkeit besonders bevorzugt. In einer bevorzugten Ausführungsform ist $x = 0$, sodass sich die Zusammensetzung $L_7La_3Zr_2O_{12}$ ergibt.

Am meisten bevorzugt ist A = Sr oder Ba.

Ionenleiter der Zusammensetzung $L_{7+x}A_xLa_{3-x}Zr_2O_{12}$ weisen eine granatartige Kristallstruktur auf. Gegenüber den bekannten Verbindungen der Zusammensetzung $L_5La_3Nb_2O_{12}$ (L = Li) wurden formal die beiden Nb(+V) durch zwei Zr(+IV) und zwei einwertige L-Kationen ersetzt. Außerdem wurde La (+III) ggf. durch A (+II) und L (+I) ersetzt. Somit wurde insgesamt der L-Anteil der Struktur erhöht. L ist bevorzugt Li oder Na, über die die Ionenleitung der Verbindungen mit Granatstruktur erfolgt. Dadurch gelingt es, mit den Verbindungen der vorliegenden Erfindung deutlich verbesserte Ionenleiter bereitzustellen.

Die Materialien der Zusammensetzung $L_{7+x}A_xLa_{3-x}Zr_2O_{12}$ weisen gegenüber den Verbindungen des Standes der Technik eine erhöhte Ionenleitfähigkeit auf. Aufgrund der Granatstruktur der Verbindungen der vorliegenden Erfindung, bei der es sich um eine 3D-isotrope Struktur handelt, ist die Ionenleitung ohne Vorzugsrichtung dreidimensional möglich.

Die elektronische Leitfähigkeit der Verbindungen der vorliegenden Erfindung ist dagegen vernachlässigbar gering. Die polykristallinen Proben der Verbindungen der vorliegenden Erfindung weisen außerdem einen geringen Korngrenzenwiderstand auf, sodass die Gesamtleitfähigkeit sich nahezu ausschließlich aus der Volumenleitfähigkeit ergibt.

Ein weiterer Vorteil der Materialien ist ihre hohe chemische Stabilität. Die Materialien zeigen insbesondere keine erkennbaren Veränderungen unter Erwärmung in Kontakt mit geschmolzenem Lithium. Bei Temperaturen bis 350 °C und Gleichspannungen bis 6 V zeigen sich keine chemischen Zersetzungen.

Ein Beispiel für eine besonders bevorzugte erfindungsgemäße Verbindung mit Granatstruktur ist $Li_7La_3Zr_2O_{12}$. Die hohe Lithium-Ionenleitfähigkeit, gute thermische und chemische Stabilität gegenüber Reaktionen mit möglichen Elektroden, Umweltverträglichkeit, Verfügbarkeit der Ausgangsmaterialien, niedrige Herstellungskosten und einfache Herstellung und Verdichtung machen $Li_7La_3Zr_2O_{12}$ zu einem vielversprechenden Feststoff-Elektrolyten, der insbesondere für wiederaufladbare Lithium-Ionen Batterien geeignet ist.

Gemäß einem weiteren Aspekt betrifft die vorliegende Erfindung Verfahren zur Herstellung der festen Ionenleiter mit granatartiger Struktur. Die Verbindungen können durch Umsetzung entsprechender Salze und/oder Oxide der enthaltenen Elemente, beispielsweise durch eine Festphasenreaktion gebildet werden. Besonders geeignete Ausgangsmaterialien sind Nitrate, Carbonate und Hydroxide, die im Verlauf der Umsetzung in entsprechende Oxide umgewandelt werden.

Spezieller betrifft die vorliegende Erfindung Verfahren zur Herstellung der festen Ionenleiter der Zusammensetzung $L_{7+x}A_xG_{3-x}Zr_2O_{12}$, (z.B. $Na_6ALa_2Zr_2O_{12}$). Die Materialien können durch Umsetzung entsprechender Salze und/oder Oxide von A, G und Zr mit einem Hydroxid, Nitrat oder Carbonat von L in einer Festphasenreaktion erhalten werden. A ist dabei wie oben definiert. Bevorzugt wird das zweiwertige Metall A in Form von Nitraten eingesetzt. Dabei sind $Ca(NO_3)_2$, $Sr(NO_3)_2$ und $Ba(NO_3)_2$ bevorzugt. Für G wird La eingesetzt, welches bevorzugt in Form von $La_2O_3$ verwendet wird. Zr wird vorteilhafterweise als Oxid eingesetzt, bevorzugt ist $ZrO_2$. L wird bevorzugt in Form von LOH, $LNO_3$ oder $L_2CO_3$ eingesetzt. Beispielsweise können bevorzugt $LiOH \cdot H_2O$ oder $NaOH \cdot H_2O$ verwendet werden. Um einen Gewichtsverlust an L (z.B. L = Li, Na) bei der Wärmebehandlung der Proben auszugleichen, wird das entsprechende Salz bevorzugt im Überschuss eingesetzt, geeignet ist beispielsweise ein Überschuss von 10 Gew.-%.

Die Ausgangsstoffe werden in einem ersten Schritt gemischt und können beispielsweise durch Zirkonoxid-Kugelmahlen in 2-Propanol gemahlen werden. Das so erhaltene Gemisch wird anschließend für mehrere Stunden, bevorzugt für 2-10 h, an Luft auf Temperaturen im Bereich von bevorzugt 400-1000 °C erhitzt. Besonders geeignet sind dabei Temperaturen von 600-800°C, beispielsweise ca. 700 °C und eine Wärmebehandlungsdauer von 4-8 Stunden, z.B. etwa 6 Stunden. Anschließend wird erneut ein Mahlvorgang durchgeführt, vorzugsweise ebenfalls durch Zirkonoxidkugelmahlen in 2-Propanol. Das Reaktionsprodukt wird anschließend bei uniaxialem oder bevorzugt isostatischem Druck in Formstücke, beispielsweise in Pellets, gepresst. Diese werden dann für mehrere Stunden, bevorzugt für 10-50 h, weiter bevorzugt für 20-30 h, bei Temperaturen im Bereich von bevorzugt 700-1200 °C, weiter bevorzugt 800-1000 °C, gesintert. Besonders geeignet sind dabei Temperaturen von ca. 900 °C und eine Wärmebehandlungsdauer von etwa 24 Stunden. Bei diesem Sintervorgang ist es vorteilhaft, die Proben mit einem Pulver der gleichen Zusammensetzung abzudecken, um übermäßige Verluste des L-Oxids zu vermeiden.

Andere, leicht anwendbare Möglichkeiten der Herstellung der Verbindung sind Precursormethoden, z.B. die Pecchini-Methode, die Glycin-Methode oder Fällungsreaktionen, da für alle Komponenten lösliche Salze existieren.

Die erfindungsgemäßen festen Ionenleiter (z.B. Lithium- oder Natriumionenleiter) sind als Festkörperelektrolyte ein wertvolles Ausgangsmaterial. Da die Materialien eine außergewöhnlich hohe Ionenleitfähigkeit bei vernachlässig-barer Elektronenleitung besitzen, können sie als Feststoffelektrolyt für Batterien (z.B. Lithium- oder Natriumbatterien) mit sehr hoher Energiedichte verwendet werden. Die hohe Stabilität der Materialien gegenüber chemischen Reaktionen z.B. mit elementarem Lithium und gängigen Elektrodenmaterialien führt dazu, dass beispielsweise die festen Ionenleiter der vorliegenden Erfindung in Batterien praktisch anwendbar sind.

Auch der Widerstand der Phasengrenze zwischen dem Feststoffelektrolyten der vorliegenden Erfindung und den Elektroden ist im Vergleich zu üblichen Festelektrolytmaterialien sehr klein. Dadurch können unter Verwendung der erfindungsgemäßen Materialien Batterien mit vergleichsweise hoher Leistung (hohen Strömen) hergestellt werden. Die Verwendung der Festkörperelektrolyte der vorliegenden Erfindung bedeutet auch eine erhöhte Sicherheit gegenüber der Verwendung von flüssigen Elektrolyten. Dies ist inbesondere bei der Anwendung in Kraftfahrzeugen von Vorteil.

In einem weiteren Aspekt betrifft die vorliegende Erfindung neben der Verwendung in Batterien auch die Ver-wendung der festen Ionenleiter (z.B. Lithiumionenleiter) in elektrochromen Systemen (Fenster, Bildschirme, Fassaden etc.) sowie für die instantane Energiespeicherung und -abgabe in Superkondensatoren (Supercaps). Unter Verwendung der erfindungsgemäßen Ionenleiter gelingt es dabei, Energiedichten von Kondensatoren mit 100 $F/cm^3$ oder mehr zu erreichen. Ein weiterer Aspekt der Erfindung ist die Verwendung der granatartigen festen Ionenleiter als Sensoren, beispielsweise für zahlreiche Gase. Erfindungsgemäß besteht auch die Möglichkeit des Einsatzes des Materials in thermoelektrischen Konvertern zur effizienten direkten Umwandlung von Wärme in elektrische Energie.

Die Ionenleiter mit granatartigen Strukturen können auch in Verbindung mit anderen Elektrolyten, beispielsweise konventionellen aprotischen flüssigen Elektrolyten als Pufferschichten verwendet werden. Es ist daher nicht erforderlich, einen Elektrolyten zu verwenden, der vollständig aus der granatartigen Struktur besteht. Vielmehr ist es möglich, beliebige bekannte Elektrolyten, die z.B. in flüssiger, gelförmiger oder fester Form vorliegen können, in Kombination mit den neuartigen granatartigen Ionenleitern zu verwenden.

Die Erfindung betrifft daher in einem weiteren Aspekt die Verwendung eines festen Ionenleiters mit einer gra-natartigen Kristallstruktur, gemäss Anspruch 1, als Schutzschicht vor einer Elektrode zur Verbesserung der chemischen Stabilität mit dem Elektrolyten. Durch die Verwendung der Ionenleiter als Pufferstruktur vor den Elektroden werden Kurzschlüsse verhindert und es ist möglich, relativ hohe Spannungen zu erzeugen und anzulegen, um so eine deutlich größere Energiedichte und Lebensdauer zu erreichen.

## Figuren

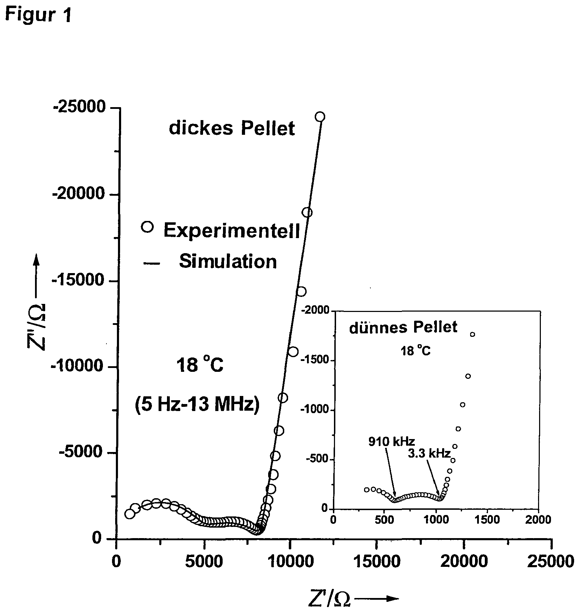

**Figur 1:** Wechselstromimpedanzkurve von $Li_7La_3Zr_2O_{12}$, gemessen an Luft bei 18 °C für ein dickes Pellet (1,02 cm Dicke und 0,92 cm Durchmesser). Die durchgezogene Linie gibt die simulierten Daten wieder mit einem Äquivalent-Stromkreis aus $(R_b Q_b)(R_{gb} Q_{gb})(Q_{el})$ (worin R der Widerstand und Q das konstante Phasenelement ist und die Indices g, gb und el Kornvolumen, Korngrenze und Elektrode bedeuten) unter Verwendung des EQUIVALENT-Programms (B. A. Boukamp, Equivalent Circuit, Version 4.55, 1997, Faculty of Chemical Technology, University of Twente, 7500 AE Enschede (Niederlande), Bericht Nr. CT88/265/128/CT89/214/128, Mai 1989). Die an Luft gemessene Impedanzkurve bei 18 °C für ein dünnes Pellet (0,18 cm Dicke und 0,98 cm Durchmesser) für $Li_7La_3Zr_2O_{12}$ ist in dem Einschub dargestellt.

**Figur 2:**

   **a)** Arrhenius-Kurven für die elektrische Volumen- und Gesamtleitfähigkeit (Volumen- und Korngrenzen) des dicken Pellets von $Li_7La_3Zr_2O_{12}$, das in zwei aufeinanderfolgenden Heiz- und Kühlzyklen erhalten wurde.
   **b)** Vergleich der Arrhenius-Kurven, die für die dicken und dünnen Pellets von $Li_7La_3Zr_2O_{12}$ während des ersten Heizvorgangs erhalten wurden (18 - 300 °C).

**Figur 3:** Vergleich der Gesamtleitfähigkeit (Volumen + Korngrenzen) von $Li_7La_3Zr_2O_{12}$ und anderen bekannten Lithiumionenleitern, die für Batterieanwendungen in Frage kommen.

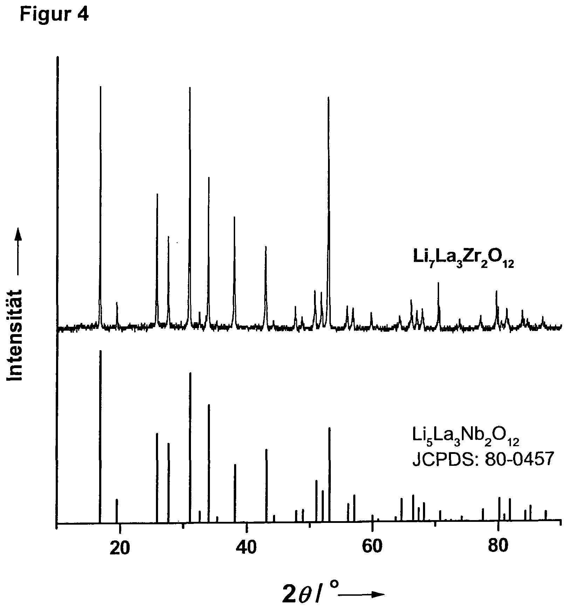

**Figur 4:** Gemessenes Pulver-XRD-Muster von $Li_7La_3Zr_2O_{12}$ und Standardmuster der bekannten Granatphase $Li_5La_3Nb_2O_{12}$ (JCPDS: 80-0457) gemäß Joint Committee on Powder Diffraction Standards.

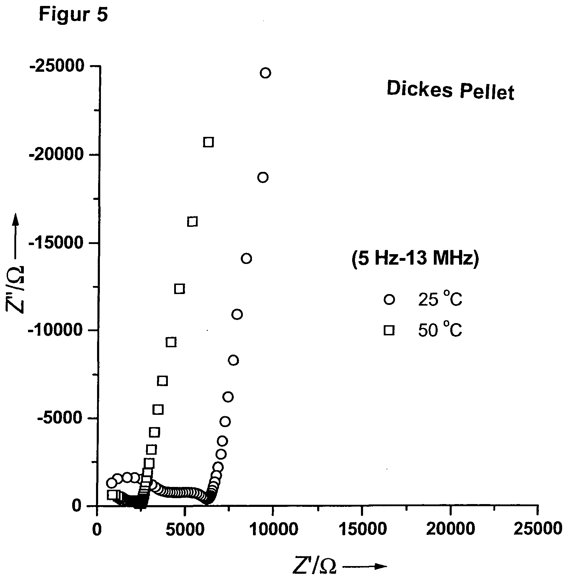

**Figur 5:** Wechselstromimpedanzkurven, gemessen an Luft bei 25 und 50 °C für das dicke Pellet von $Li_7La_3Zr_2O_{12}$.

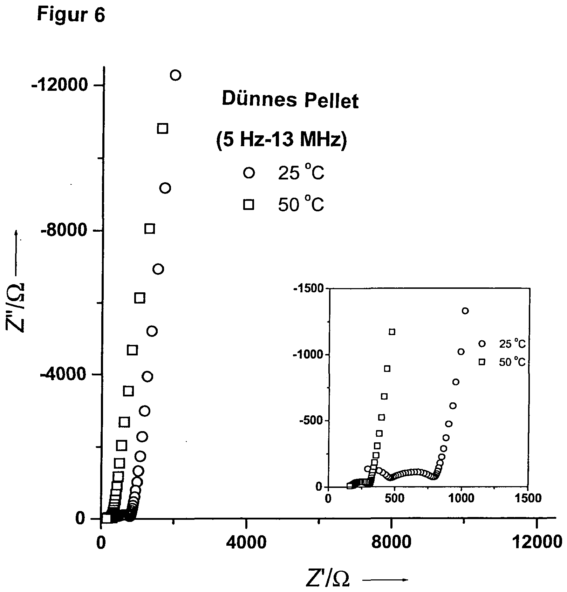

**Figur 6:** Wechselstromimpedanzkurven, gemessen an Luft bei 25 und 50 °C für das dünne Pellet aus $Li_7La_3Zr_2O_{12}$. Der weitere Verlauf bei hoher Frequenz ist als Einschub eingefügt.

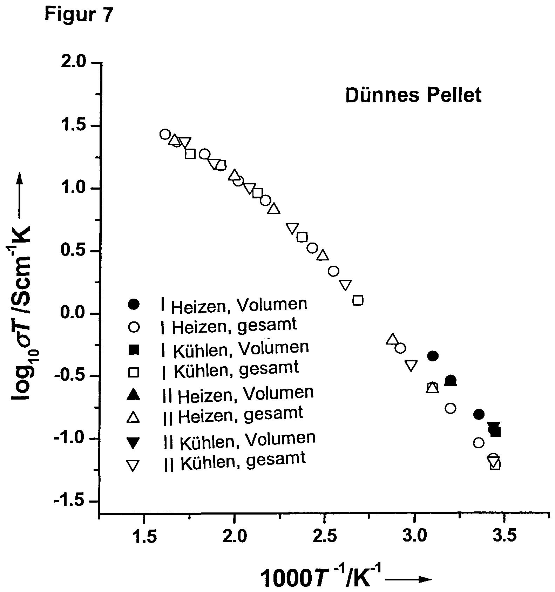

**Figur 7:** Arrhenius-Kurven für die elektrische Volumen- und Gesamt (Volumen + Korngrenzen)-Leitfähigkeit des dünnen Pellets aus $Li_7La_3Zr_2O_{12}$, welches in zwei aufeinanderfolgenden Heiz- und Kühlzyklen erhalten wurde.

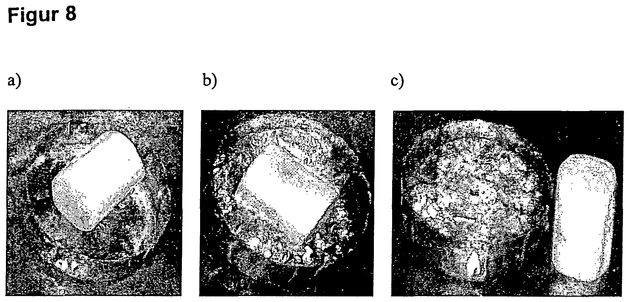

**Figur 8:** Fotografien von a) $Li_7La_3Zr_2O_{12}$-Pellet und Molybdäntiegel vor der Einwirkung von geschmolzenem Lithium, b) $Li_7La_3Zr_2O_{12}$-Pellet in geschmolzenem Lithium und c) $Li_7La_3Zr_2O_{12}$-Pellet und Molybdäntiegel unmittelbar nach der Einwirkung von geschmolzenem Lithium für 48 h. Die in Figur c) abgebildete Fotografie zeigt, dass die Farbe des Pellets unverändert bleibt (elfenbeinfarben) und dass kein Reaktionsprodukt gebildet wird.

Das folgende Beispiel dient der Veranschaulichung einer besonders bevorzugten Ausführungsform der vorliegenden Erfindung.

<u>Beispiel:</u>

In einer Festphasenreaktion wurden stöchiometrische Mengen der jeweils hoch reinen Ausgangsstoffe:

LiOH (Alfa Aesar, >99%), vorgetrocknet bei 200°C für 6h, 10 Gew.-% Überschuss, um den Li-Verlust während des Sintervorgangs auszugleichen;
$La_2O_3$ (Alfa Aesar, >99,99%), vorgetrocknet bei 900°C für 24h; und $ZrO_2$ (Aldrich, >99%)
umgesetzt.

Die Ausgangsstoffe wurden für etwa 12 h in 2-Propanol unter Verwendung von Zirkonoxidgefäßen und -kugeln kugelgemahlen. Anschließend erfolgte eine Wärmebehandlung für 12 Stunden an Luft bei 900 und 1125 °C. Das erhaltene Produkt wurde dann erneut kugelgemahlen. Anschließend wurden die Reaktionsprodukte unter isostatischem Druck zu Pellets verpresst und bei 1230 °C für 36 h gesintert. Die Proben waren während dieses Vorgangs von einem Pulver mit derselben Zusammensetzung bedeckt, um einen übermäßigen Lithiumverlust zu vermeiden. Die Heizrate betrug bei allen Behandlungen 1 °C pro Minute. Die gesinterten komprimierten Pellets wurden mit einer Diamantsäge in dünnere Pellets geschnitten. Unter Verwendung von Pulverröntgendiffraktometrie (XRD) (SEIFERT 3000, $CuK_\alpha$ Deutschland) wurde die Phasenbildung überwacht. Die Gitterkonstante wurde aus den Pulver-XRD-Daten durch die Methode der kleinsten Quadrate bestimmt.
Die Messung der elektrischen Leitfähigkeit erfolgte an Luft, wobei zwei unterschiedlich dicke Pellets verwendet wurden (dickes Pellet: 1,02 cm Dicke und 0,92 cm Durchmesser, und dünnes Pellet: 0,18 cm Dicke und 0,98 cm Durchmesser). Die Messung erfolgte unter Verwendung von Li-Ionen blockierenden Au-Elektroden (bei 700 °C für 1 h gehärtete Au-Paste) im Temperaturbereich von 18 bis 350 °C unter Verwendung eines Impedanz- und Gain-Phase-Analysators (HP 4192 A, Hewlett-Packard Co., Palo Alto, CA) (5 Hz - 13 MHz). Vor jeder Impedanzmessung wurden die Proben für 3 bis 6 h bei konstanter Temperatur äquilibriert. Für jedes Pellet wurden die Impedanzmessungen bei zwei aufeinanderfolgenden Heiz- und Kühlzyklen durchgeführt. Die Daten der thermogravimetrischen (TG) und differenziellen thermischen Analyse (NETZSCH STA 409 C/CD) wurden an Luft über den Temperaturbereich 20-900-20°C bei einer Heiz- und Kühlungsrate von 2 °C pro Minute und isotherm bei 900 °C gesammelt.

Die Stabilität von $Li_7La_3Zr_2O_{12}$ gegenüber geschmolzenem Lithium wurde in einer mit Argon gefüllten Glasbox untersucht, indem das Pellet mit einem großen Überschuss an geschmolzenem Lithium für 48 h in einem MolybdänTiegel umgesetzt wurde.

Obwohl zahlreiche Röntgendiffraktometrie (XRD)-Untersuchungen an $Li_5La_3M_2O_{12}$ (M = Nb, Ta)-Granaten durchgeführt wurden, wurde die Struktur im Hinblick auf die Raumgruppe und Position der Lithiumkationen kontrovers diskutiert (a) D. Mazza, Mater. Lett. 1988, 7, 205-207; b) H. Hyooma, K. Hayashi, Mater. Res. Bull. 1988, 23, 1399-1407; c) J. Isasi, M. L. Veiga, R. Saez-Puche, A. Jereze, C. Pico, J. Alloys Compd. 1991, 177, 251-257). Vor kurzem ergaben Neutronendiffraktometrie-Untersuchungen, dass $Li_5La_3M_2O_{12}$ (M = Nb, Ta) in der Raumgruppe la3d kristallisiert und dass sich Li sowohl in den tetraedrischen als auch oktaedrischen Positionen befindet und dass in beiden Arten von Positionen Leerstellen vorhanden sind (a) E. J. Cussen, Chem. Commun. 2006, 412-413; b) M. P. O'Callaghan, D. R. Lynham, E. J. Cussen, G. Z. Chen, Chem. Mater. 2006, 18, 4681-4689). Das gemessene Pulver XRD Muster von $Li_7La_3Zr_2O_{12}$ stimmt gut mit dem Standardmuster der bekannten Granatphase $Li_5La_3Mb_2O_{12}$ überein und verdeutlicht die Fähigkeit der Granatstruktur, Kationen in unterschiedlichem Oxidationszustand und mit unterschiedlicher Größe ohne übermäßige Veränderung der Symmetrie einzubauen. Das Diffraktometrie-Muster für eine kubische Zelle mit einer Gitterkonstante von A = 12,9682 (6) Å wurde bestimmt.

Eine typische bei 18 °C erhaltene Impedanzkurve für ein dickes Pellet von $Li_7La_3Zr_2O_{12}$ ist in Figur 1 gezeigt. Das Auftreten des Anstiegs im Bereich niedriger Frequenzen bei einer ionischen Blockierung der Elektroden ist ein Anzeichen dafür, dass das untersuchte Material ein Ionenleiter ist (a) V. Thangadurai, R. A. Huggins, W. Weppner, J. Power Sources 2002, 108, 64-69; b) J. T. S. Irvine, D. C. Sinclair, A. R. West, Adv. Mater. 1990, 2, 132-138). Ein ähnliches Verhalten wurde bereits für die zuvor untersuchten Materialien mit granatartiger Struktur beobachtet. Die Impedanzkurve konnte in Volumen-, Korngrenzen- und Elektrodenwiderstände aufgelöst werden. Die durchgezogene Linie in Figur 1 repräsentiert die Daten mit einem äquivalenten Stromkreis von $(R_bQ_b)(R_{gb}Q_{gb})(Q_{el})$ unter Verwendung des ÄQUIVALENT-Programms. Die bei 18 °C gemessene Impedanzkurve für das dünne Pellet von $Li_7La_3Zr_2O_{12}$ ist als Einschub in Figur 1 gezeigt. Die Volumen- und Gesamtleitfähigkeit des dicken Pellets (1,02 cm dick und 0,92 cm Durchmesser) und des dünnen Pellets (0,18 cm dick und 0,98 cm Durchmesser) von $Li_7La_3Zr_2O_{12}$, die bei den verschiedenen Temperaturen beobachtet wurden, wurden aus den Schnittpunkten der Hoch- und Niederfrequenzhalbkreise mit der Achse abgeleitet und sind in Tabelle 1 zusammengefasst. Die in Figur 1 und Tabelle 1 dargestellten Daten zeigen für das dicke und das dünne Pellet von $Li_7La_3Zr_2O_{12}$ ähnliche elektrische Eigenschaften. Das dünne Pellet zeigt eine geringfügig höhere Volumen-und Gesamtleitfähigkeit im Vergleich zu der Probe des dicken Pellets. Außerdem war eine interessante Beobachtung, dass der Korngrenzenbeitrag zu dem Gesamtwiderstand weniger als 50 % ausmacht, und mit steigender Temperatur sinkt (Tabelle 1) für sowohl das dicke als auch das dünne Pellet. Bei höherer Temperatur (über 75 °C für das dicke Pellet und über 50 °C für das dünne Pellet) ist es schwierig, den Korngrenzenbeitrag gegenüber dem Volumenbeitrag noch genau zu ermitteln; daher wurde für die Bestimmung der elektrischen Leitfähigkeit über den untersuchten Temperaturbereich der Gesamtwert der Volumen-und Korngrenzenbeiträge dargestellt. Die Gesamtleitfähigkeit bei Raumtemperatur (3 x 10$^{-4}$S/cm bei 25 °C) des neuen kristallinen schnellen Lithiumionenleiters $Li_7La_3Zr_2O_{12}$ mit granatartiger Struktur ist besser als die aller anderen festen Lithiumionenleiter und aller zuvor beschriebenen Lithiumgranate.

Dieses Ergebnis, dass Gesamt- und Volumenleitfähigkeiten in derselben Größenordnung liegen, ist eine besonders günstige Eigenschaft der hier untersuchten $Li_7La_3Zr_2O_{12}$ Granatstruktur im Vergleich zu anderen keramischen Lithiumionenleitern. Für viele Anwendungen von Festelektrolyten in elektrochemischen Vorrichtungen wie etwa Batterien, Sensoren und elektrochromen Displays sollte die Gesamtleitfähigkeit so hoch wie möglich sein. Volumen- und Gesamtleitfähigkeit können außerdem durch eine Niedrigtemperatursynthese von $Li_7La_3Zr_2O_{12}$ und durch eine weitere Verdichtung mit Hilfe eines geeigneten Sintervorgangs noch weiter verbessert werden.

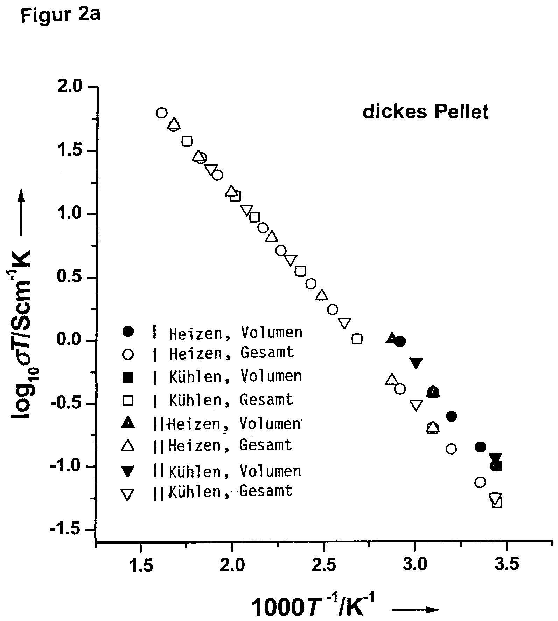

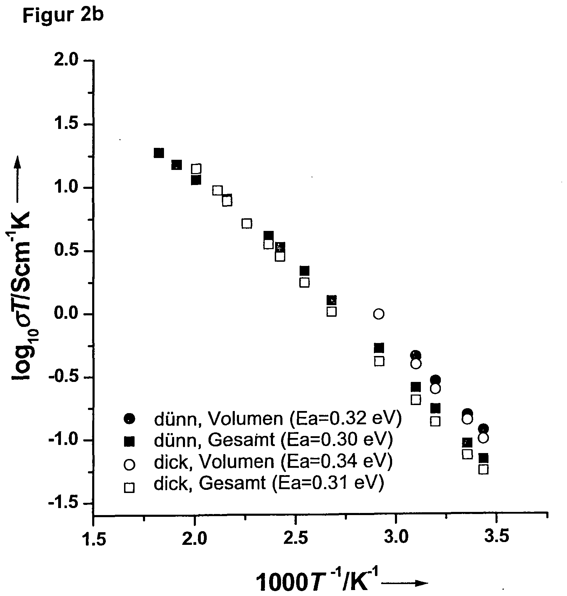

Die Arrhenius-Kurven für die elektrische Volumen- und Gesamtleitfähigkeit von $Li_7La_3Zr_2O_{12}$, welches in zwei Heiz- und Kühlzyklen erhalten wurde, sind für das dicke Pellet in Figur 2a gezeigt. Es erfolgt keine merkliche Verschiebung der Leitfähigkeit bei den beiden Zyklen. Dies bedeutet, dass die untersuchte granatartige Struktur thermisch stabil ist, und dass keinerlei Phasenübergang in dem untersuchten Temperaturbereich zwischen Raumtemperatur und 350 °C erfolgt. Ein ähnliches Arrhenius-Verhalten wurde auch für das dünne Pellet aus $Li_7La_3Zr_2O_{12}$ beobachtet. In Figur 2b werden die Daten des dicken und des dünnen Pellets von $Li_7La_3Zr_2O_{12}$, die jeweils in dem ersten Heizverfahren erhalten wurden, verglichen. Die für die Volumen- und Gesamtleitfähigkeit des dünnen Pellets erhaltenen Aktivierungsenergien (0,32 eV bei 18 - 50 °C und 0,30 eV bei 18 - 300 °C) sind geringfügig niedriger als diejenigen, für die Volumen- und Gesamtleitfähigkeit des dicken Pellets (0,34 eV bei 18 - 70 °C und 0,31 eV bei 18 - 300 °C). Die für das dünne Pellet erhaltene Leitfähigkeit ist geringfügig höher als die diejenige des dicken Pellets.

Neben der Impedanzanalyse wurde die ionische Natur der elektrischen Leitfähigkeit außerdem durch EMK-Messungen bestätigt, wobei $Li_7La_3Zr_2O_{12}$ als fester Elektrolyt zwischen elementarem Lithium und Al, LiAl verwendet wurde. Die Probe wurde mit einer Aluminiumschicht auf der Oberseite bedeckt und auf Lithium aufgesetzt, welches in einem Handschuhkasten mit inerter Ar-Gas-Befüllung geschmolzen wurde. Das Aluminium wurde sowohl durch chemische Reaktion mit Lithium legiert als auch durch coulometrische Titration von Lithium in das Aluminium von der gegenüberliegenden Lithiumelektrode. Die resultierende Spannung lag im Bereich des theoretischen Wertes. Die Differenz war auf die nicht-homogene Temperaturverteilung und entsprechende Phänomene aufgrund irreversibler Prozesse zurückzuführen.

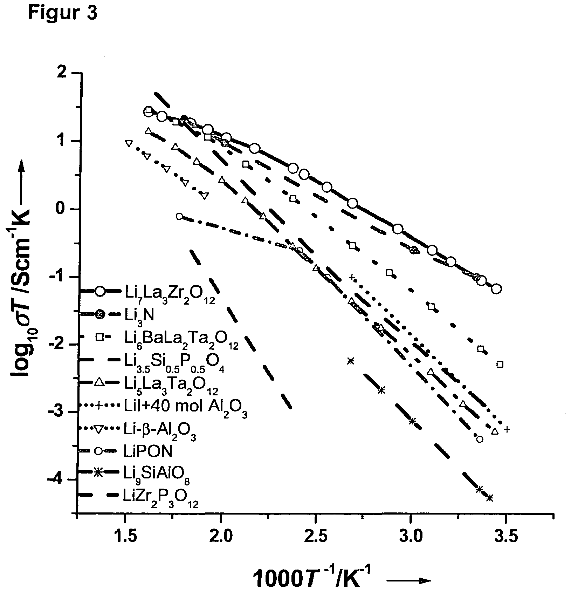

Figur 3 zeigt einen Vergleich der Lithiumionenleitfähigkeit von $Li_7La_3Zr_2O_{12}$ mit anderen bekannten Lithiumionenleitern, die für die Verwendung im Zusammenhang mit Batterien in Betracht gezogen werden. Die Leitfähigkeit ist höher als bei Li-β-Aluminiumoxid, Dünnschicht-Lipon ($Li_{2,9}PO_{3,3}N_{0,46}$), $Li_9SiAlO_8$, LiI + 40 mol $Al_2O_3$, $LiZr_2(PO_4)_3$, $Li_{3,5}Si_{0,5}P_{0,5}O_4$, $Li_5La_3Ta_2O_{12}$ und $Li_3BaLa_2Ta_2O_{12}$. Die im Vergleich zu anderen Lithium-haltigen Granaten beobachtete hohe Lithiumleitfähigkeit und geringe Aktivierungsenergie sind möglicherweise auf die Zunahme der kubischen Gitterkonstante, die Zunahme der Lithiumionenkonzentration, eine geringere chemische Wechselwirkung zwischen den Lithiumionen und anderen Ionen, die das Gitter bilden, und teilweise auf die verbesserte Verdichtung (92 % der theoretischen Dichte) zurückzuführen. Bei niedrigeren Temperaturen ist die Leitfähigkeit des weniger stabilen polykristallinen $Li_3N$ ($6,6 \times 10^{-4}$ S/cm bei 27 °C) mit derjenigen von $Li_7La_3Zr_2O_{12}$ vergleichbar. Bei höherer Temperatur zeigt $Li_7La_3Zr_2O_{12}$ jedoch eine höhere Gesamtleitfähigkeit.

Die thermische Stabilität von $Li_7La_3Zr_2O_{12}$, der grundlegende Vorteil des kristallinen Lithiumionenleiters, wurde durch thermogravimetrische Messungen (TG) und differenzielle thermische Analyse (DTA) bestätigt. Die in Luftatmosphäre gesammelten TG-DTA-Daten ergaben keine signifikante Veränderung der Masse und keine nachweisbare Phasenveränderung sowohl bei dem Heiz- als auch bei dem Kühlungsvorgang innerhalb des Temperaturbereichs von 20 bis 900 °C. Es wurde gefunden, dass Zirkonium-enthaltendes $Li_7La_3Zr_2O_{12}$ stabil gegenüber geschmolzenem Lithium ist und außerdem über die Beobachtungszeit mehrerer Wochen chemisch stabil gegenüber einer Einwirkung von Feuchtigkeit und Luft ist.

**Tabelle 1**

| Art des Pellets | Temperatur (°C) | $\sigma_{Volumen}$ (Scm$^{-1}$) | $\sigma_{gesamt}$ (Scm$^{-1}$) | $R_{gb}/R_b+R_{gb}$ [a] |
|---|---|---|---|---|
| Dickes Pellet | 18 | $3.37 \times 10^{-4}$ | $1.90 \times 10^{-4}$ | 0.44 |
| | 25 | $4.67 \times 10^{-4}$ | $2.44 \times 10^{-4}$ | 0.48 |
| | 50 | $1.19 \times 10^{-3}$ | $6.15 \times 10^{-4}$ | 0.49 |
| Dünnes Pellet | 18 | $3.97 \times 10^{-4}$ | $2.32 \times 10^{-4}$ | 0.42 |
| | 25 | $5.11 \times 10^{-4}$ | $3.01 \times 10^{-4}$ | 0.41 |
| | 50 | $1.45 \times 10^{-3}$ | $7.74 \times 10^{-4}$ | 0.47 |

Impedanzdaten von $Li_7La_3Zr_2O_{12}$ (dickes Pellet: 1,02 cm dick und 0,92 cm Durchmesser und dünnes Pellet: 0,18 cm Dicke und 0,98 cm Durchmesser), gemessen an Luft.

[a]$R_{gb}$ = Korngrenzenwiderstand, $R_b$ = Volumenwiderstand

Tabelle 2: **Pulver XRD-Muster von $Li_7La_3Zr_2O_{12}$ mit Granatstruktur**

| h | k | l | $d_{obs}$.(Å) | $d_{cal}$.(Å) | $l_{obs}$ |
|---|---|---|---|---|---|
| 2 | 1 | 1 | 5.278 | 5.294 | 99 |
| 2 | 2 | 0 | 4.574 | 4.584 | 17 |
| 3 | 2 | 1 | 3.460 | 3.465 | 55 |
| 4 | 0 | 0 | 3.239 | 3.242 | 42 |
| 4 | 2 | 0 | 2.897 | 2.899 | 100 |
| 3 | 3 | 2 | 2.761 | 2.764 | 14 |
| 4 | 2 | 2 | 2.645 | 2.647 | 61 |
| 5 | 2 | 1 | 2.365 | 2.367 | 49 |
| 5 | 3 | 2 | 2.102 | 2.103 | 37 |

(fortgesetzt)

Tabelle 2: **Pulver XRD-Muster von $Li_7La_3Zr_2O_{12}$ mit Granatstruktur**

| h | k | l | $d_{obs}.$(Å) | $d_{cal}.$(Å) | $I_{obs}$ |
|---|---|---|---|---|---|
| 6 | 2 | 0 | 2.048 | 2.050 | 11 |
| 6 | 3 | 1 | 1.911 | 1.912 | 16 |
| 4 | 4 | 4 | 1.870 | 1.871 | 12 |
| 6 | 4 | 0 | 1.798 | 1.798 | 21 |
| 6 | 3 | 3 | 1.764 | 1.764 | 20 |
| 6 | 4 | 2 | 1.732 | 1.732 | 93 |
| 7 | 3 | 2 | 1.646 | 1.646 | 15 |
| 8 | 0 | 0 | 1.620 | 1.621 | 14 |
| 6 | 5 | 3 | 1.549 | 1.550 | 13 |
| 7 | 5 | 2 | 1.468 | 1.468 | 9 |
| 8 | 4 | 0 | 1.450 | 1.449 | 11 |
| 8 | 4 | 2 | 1.415 | 1.414 | 17 |
| 9 | 2 | 1 | 1.398 | 1.398 | 14 |
| 6 | 6 | 4 | 1.382 | 1.382 | 14 |
| 9 | 3 | 2 | 1.337 | 1.337 | 24 |
| 7 | 7 | 2 | 1.283 | 1.284 | 10 |
| 7 | 6 | 5 | 1.236 | 1.236 | 11 |
| 8 | 6 | 4 | 1.204 | 1.204 | 21 |
| 10 | 4 | 2 | 1.184 | 1.183 | 14 |
| 10 | 5 | 1 | 1.155 | 1.155 | 13 |
| 8 | 8 | 0 | 1.146 | 1.146 | 10 |
| 10 | 5 | 3 | 1.120 | 1.120 | 10 |

**Patentansprüche**

1. Fester Ionenleiter mit einer granatartigen Kristallstruktur, der die stöchiometrische Zusammensetzung $L_{7+x}A_xG_{3-x}Zr_2O_{12}$ aufweist, worin L jeweils unabhängig ein einwertiges Alkalimetallkation ausgewählt aus $Li^+$, $Na^+$ und $K^+$ ist,
A jeweils unabhängig ein zweiwertiges Erdalkalimetallkation ist,
G La bedeutet, und

$$0 \leq x \leq 3.$$

2. Fester Ionenleiter nach Anspruch 1, worin $0 \leq x \leq 1$

3. Fester Ionenleiter nach Anspruch 1, wobei L = Na ist.

4. Fester Ionenleiter nach einem der Ansprüche 1 bis 3, worin A ausgewählt ist aus Ca, Sr und/oder Ba.

5. Fester Ionenleiter nach Anspruch 1 oder 2, worin die stöchiometrische Zusammensetzung $Li_7La_3Zr_2O_{12}$ ist.

6. Verfahren zur Herstellung eines festen Ionenleiters nach einem der Ansprüche 1 bis 5,
**dadurch gekennzeichnet,**
**dass** Salze und/oder Oxide von L, A, G und Zr miteinander umgesetzt werden.

7. Verfahren nach Anspruch 6,
**dadurch gekennzeichnet,**

**dass** die Umsetzung mittels Precursor-Methoden, beispielsweise der Pechini-Methode, der Glycin-Methode und mittels Fällungsreaktionen gelöster Salze der Komponenten erfolgt.

8. Verfahren nach Anspruch 6,
**dadurch gekennzeichnet,**
**dass** die Umsetzung in einer Festphasenreaktion erfolgt.

9. Verfahren nach Anspruch 6 oder 8,
**dadurch gekennzeichnet,**
**dass** L und A in Form von Nitraten, Carbonaten oder Hydroxiden eingesetzt werden und mit $G_2O_3$ und $ZrO_2$ umgesetzt werden.

10. Verfahren nach einem der Ansprüche 6, 8 oder 9, welches die folgenden Schritte umfasst:

   a) Mischen der Ausgangsstoffe und Kugelmahlen, vorzugsweise mit Zirkonoxidgefäßen und -kugeln in 2-Propanol,
   b) Erhitzen des Gemisches aus a) an Luft für zwei bis zehn Stunden auf 400 bis 1000 °C,
   c) Kugelmalen, vorzugsweise mit Zirkonoxidgefäßen und -kugeln in 2-Propanol,
   d) Pressen des Gemisches mit isostatischem Druck zu einer gewünschten Form, und
   e) Sintern des mit einem Pulver der gleichen Zusammensetzung bedeckten Produkts aus Schritt d) für 10 bis 50 Stunden bei 700 bis 1200°C.

11. Verfahren nach Anspruch 10, wobei in Schritt b) das Gemisch für sechs Stunden auf 700 °C erhitzt wird und in Schritt e) für 24 Stunden bei 900 °C gesintert wird.

12. Verwendung eines festen Ionenleiters nach einem der Ansprüche 1 bis 5 in Batterien, Akkumulatoren, Supercaps, Brennstoffzellen, Sensoren, thermoelektrischen Konvertern und/oder elektrochromen Vorrichtungen wie Fenstern, Bildschirmen und Fassaden.

13. Verwendung eines festen Ionenleiters nach einem der Ansprüche 1 bis 5 als Beschichtung für eine Elektrode/Schutzschicht vor einer Elektrode.

14. Elektrode, welche mit einem festen Ionenleiter nach einem der Ansprüche 1 bis 5 beschichtet ist.

15. Batterie, umfassend eine oder mehrere Elektroden nach Anspruch 14.

**Claims**

1. Solid ion conductor which has a garnet-like crystal structure and has the stoichiometric composition $L_{7+x}A_xG_{3-x}Zr_2O_{12}$, where
L is in each case independently a monovalent alkali metal cation selected from among $Li^+$, $Na^+$ and $K^+$,
A is in each case independently a divalent alkaline earth metal cation,
G is La, and

$$0 \leq x \leq 3$$

2. Solid ion conductor according to Claim 1, wherein $0 \leq x \leq 1$.

3. Solid ion conductor according to Claim 1, wherein L = Na.

4. Solid ion conductor according to any of Claims 1 to 3, wherein A is selected from among Ca, Sr and Ba.

5. Solid ion conductor according to Claim 1 or 2, wherein the stoichiometric composition is $Li_7La_3Zr_2O_{12}$.

6. Process for preparing a solid ion conductor according to any of Claims 1 to 5, **characterized in that** salts and/or oxides of L, A, G and Zr are reacted with one another.

7. Process according to Claim 6, **characterized in that** the reaction is carried out by means of precursor methods, for example the Pechini method, the glycine method and by means of precipitation reactions of dissolved salts of the components.

8. Process according to Claim 6, **characterized in that** the reaction is carried out in a solid-phase reaction.

9. Process according to Claim 6 or 8, **characterized in that** L and A are used in the form of nitrates, carbonates or hydroxides and are reacted with $G_2O_3$ and $ZrO_2$.

10. Process according to any of Claims 6, 8 or 9, which comprises the following steps:

    a) mixing of the starting materials and ball-milling, preferably in 2-propanol using zirconium oxide containers and balls,
    b) heating of the mixture from a) at from 400 to 1000°C in air for from two to ten hours,
    c) ball-milling, preferably in 2-propanol using zirconium oxide containers and balls,
    d) isostatic pressing of the mixture to produce a desired shape and
    e) sintering of the product from step d) covered with a powder of the same composition at from 700 to 1200°C for from 10 to 50 hours.

11. Process according to Claim 10, wherein the mixture is heated at 700°C for six hours in step b) and is sintered at 900°C for 24 hours in step e).

12. Use of a solid ion conductor according to any of Claims 1 to 5 in batteries, accumulators, supercaps, fuel cells, sensors, thermoelectric converters and/or electrochromic devices such as windows, VDUs and exterior walls.

13. Use of a solid ion conductor according to any of Claims 1 to 5 as coating for an electrode protective layer before an electrode.

14. Electrode which has been coated with a solid ion conductor according to any of Claims 1 to 5.

15. Battery comprising one or more electrodes according to Claim 14.


**Revendications**

1. Conducteur d'ions solide à structure cristalline de type grenat, qui présente la composition stoechiométrique $L_{7+x}A_xG_{3-x}Zr_2O_{12}$, dans laquelle
   les L sont chacun indépendamment un cation de métal alcalin monovalent choisi parmi $Li^+$, $Na^+$ et $K^+$,
   les A sont chacun indépendamment un cation de métal alcalino-terreux bivalent,
   G signifie La et

$$0 \leq x \leq 3.$$

2. Conducteur d'ions solide selon la revendication 1, dans lequel $0 \leq x \leq 1$.

3. Conducteur d'ions solide selon la revendication 1, dans lequel L = Na.

4. Conducteur d'ions solide selon l'une quelconque des revendications 1 à 3, dans lequel A est choisi parmi Ca, Sr et/ou Ba.

5. Conducteur d'ions solide selon la revendication 1 ou 2, dans lequel la composition stoechiométrique est $Li_7La_3Zr_2O_{12}$.

6. Procédé de fabrication d'un conducteur d'ions solide selon l'une quelconque des revendications 1 à 5, **caractérisé en ce que** des sels et/ou des oxydes de L, A, G et Zr sont mis en réaction les uns avec les autres.

7. Procédé selon la revendication 6, **caractérisé en ce que** la réaction a lieu par des méthodes utilisant des précurseurs, par exemple la méthode Pechini, la méthode glycine et par des réactions de précipitation de sels dissous des composants.

8. Procédé selon la revendication 6, **caractérisé en ce que** la réaction a lieu par une réaction en phase solide.

9. Procédé selon la revendication 6 ou 8, **caractérisé en ce que** L et A sont utilisés sous la forme de nitrates, de carbonates ou d'hydroxydes, et mis en réaction avec $G_2O_3$ et $ZrO_2$.

10. Procédé selon l'une quelconque des revendications 6, 8 ou 9, qui comprend les étapes suivantes :

   a) le mélange des matières premières et le broyage avec des billes, de préférence avec des récipients et des billes en oxyde de zirconium dans du 2-propanol,
   b) le chauffage du mélange de a) dans l'air pendant deux à dix heures à une température de 400 à 1 000 °C,
   c) le broyage avec des billes, de préférence avec des récipients et des billes en oxyde de zirconium dans du 2-propanol,
   d) la compression du mélange avec une pression isostatique en une forme souhaitée, et
   e) le frittage du produit de l'étape d) recouvert avec une poudre de la même composition pendant 10 à 50 heures à une température de 700 à 1 200 °C.

11. Procédé selon la revendication 10, dans lequel, à l'étape b), le mélange est porté à 700 °C pendant six heures et, à l'étape e), fritté à 900 °C pendant 24 heures.

12. Utilisation d'un conducteur d'ions solide selon l'une quelconque des revendications 1 à 5 dans des batteries, des accumulateurs, des super-condensateurs, des piles à combustible, des capteurs, des convertisseurs thermoélectriques et/ou des dispositifs électrochromes tels que des fenêtres, des écrans et des façades.

13. Utilisation d'un conducteur d'ions solide selon l'une quelconque des revendications 1 à 5 en tant que revêtement pour une électrode/couche de protection devant une électrode.

14. Électrode, qui est revêtue avec un conducteur d'ions solide selon l'une quelconque des revendications 1 à 5.

15. Batterie, comprenant une ou plusieurs électrodes selon la revendication 14.

**Figur 1**

## Figur 2a

**Figur 2b**

# Figur 3

**Figur 4**

$Li_7La_3Zr_2O_{12}$

$Li_5La_3Nb_2O_{12}$
JCPDS: 80-0457

$2\theta\,/\,°\longrightarrow$

**Figur 5**

## Figur 6

Dünnes Pellet
(5 Hz-13 MHz)
○  25 °C
□  50 °C

## Figur 7

# Figur 8

a)

b)

c)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005085138 A

- JP H0389469 B

**In der Beschreibung aufgeführte Nicht-Patentliteratur**

- **THANGADURAI et al.** Novel Fast Lithium Ion Conduction in Garnet-Type Li5La3M2O12 (M = Nb, Ta). *J. Am. Ceram. Soc.,* 2003, vol. 86, 437-440
- **V. THANGADURAI ; W. WEPPNER.** *Adv. Funct. Mater.,* 2005, vol. 15, 107-112
- **V. THANGADURAI ; W. WEPPNER.** *J. Power Sources,* 2005, vol. 142, 339-344
- **B. A. BOUKAMP.** Equivalent Circuit. Faculty of Chemical Technology, University of Twente, 1997
- **D. MAZZA.** *Mater. Lett.,* 1988, vol. 7, 205-207
- **H. HYOOMA ; K. HAYASHI.** *Mater. Res. Bull.,* 1988, vol. 23, 1399-1407

- **J. ISASI ; M. L. VEIGA ; R. SAEZ-PUCHE ; A. JEREZE ; C. PICO.** *J. Alloys Compd.,* 1991, vol. 177, 251-257
- **E. J. CUSSEN.** *Chem. Commun.,* 2006, 412-413
- **M. P. O'CALLAGHAN ; D. R. LYNHAM ; E. J. CUSSEN ; G. Z. CHEN.** *Chem. Mater.,* 2006, vol. 18, 4681-4689
- **V. THANGADURAI ; R. A. HUGGINS ; W. WEPPNER.** *J. Power Sources,* 2002, vol. 108, 64-69
- **J. T. S. IRVINE ; D. C. SINCLAIR ; A. R. WEST.** *Adv. Mater.,* 1990, vol. 2, 132-138